# FASCICULE DE BREVET EUROPEEN

(11) **EP 3 521 765 B1**
(45) Date de publication et mention de la délivrance du brevet: **13.10.2021**
(21) Numéro de dépôt: 19155144.9
(22) Date de dépôt: 01.02.2019
(51) Int. Cl.: G01C 23/00

(54) **PROCÉDÉ DE VISUALISATION DE L'ATTITUDE D'UN AÉRONEF, PRODUIT PROGRAMME D'ORDINATEUR ET SYSTÈME DE VISUALISATION ASSOCIÉS**
ANZEIGEVERFAHREN DES VERHALTENS EINES LUFTFAHRZEUGS, ENTSPRECHENDES COMPUTERPROGRAMMPRODUKT UND ANZEIGESYSTEM
METHOD FOR VIEWING THE ATTITUDE OF AN AIRCRAFT, ASSOCIATED COMPUTER PROGRAM PRODUCT AND VIEWING SYSTEM

(30) Priorité: 05.02.2018 FR 1800115
(43) Date de publication de la demande: 07.08.2019
(73) Titulaire: Thales, 92400 Courbevoie (FR)
(72) Inventeur: MENNECHET, Florent, 33700 Merignac (FR); SERVANTIE, Xavier, 33700 Merignac (FR)
(74) Mandataire: Lavoix

(56) Documents cités:
- EP-A2- 0 358 619
- WO-A1-92/01906
- US-A- 4 305 057
- US-A1- 2008 262 664
- jake1729: "F-16 Incentive Flight FULL Length HUD Cam", , 22 novembre 2011 (2011-11-22), pages 1-2, XP054978864, Extrait de l'Internet: URL:https://www.youtube.com/watch?v=JorI8E dSxW4&index=35&list=PL52b8asqsMEPL2z9sm8Ec WsCbrqJtvJ1L [extrait le 2018-11-16]
- Steven P Rogers ET AL: "DEVELOPMENT OF A FLIGHT SIMULATOR AND AN INTELLIGENT SYMBOLOGY MANAGEMENT SYSTEM FOR HELMET MOUNTED DISPLAYS IN ROTORCRAFT", U.S. ARMY AVIATION AND MISSILE COMMAND, 1 juin 1999 (1999-06-01), pages 1-191, XP055092491, Extrait de l'Internet: URL:http://www.dtic.mil/get-tr-doc/pdf?Loc ation=U2&doc=GetTRDoc.pdf&AD=ADA365110 [extrait le 2013-12-10]

## Description

La présente invention concerne un procédé de visualisation de l'attitude d'un aéronef.

La présente invention concerne également un produit programme d'ordinateur et un système de visualisation associés.

Différentes méthodes et dispositifs de visualisation de l'attitude des aéronefs existent dans l'état de la technique.

Ainsi, parmi ces dispositifs, on connait notamment un instrument de bord classique connu sous le nom « horizon artificiel » ou « ADI » (de l'anglais « Attitude Display Indicator ») comportant notamment un symbole représentatif de l'aéronef et une échelle de tangage incluant une ligne d'horizon.

La position du symbole représentatif de l'aéronef par rapport à la ligne d'horizon permet au pilote de déterminer l'assiette de l'aéronef ainsi que son inclinaison par rapport à un plan horizontal. Selon différentes écoles aéronautiques, c'est la ligne d'horizon qui peut être mobile par rapport au symbole représentatif ou à l'inverse, le symbole représentatif peut être mobile par rapport à la ligne d'horizon.

Avec le développement des écrans d'affichage du cockpit des aéronefs, l'horizon artificiel est le plus souvent intégré dans l'un de ces écrans, où il est visualisé en utilisant une interface graphique adaptée. Un exemple d'un tel écran est l'écran primaire de vol PFD (de l'anglais « Primary Flight Display »).

Dans ce cas, l'affichage de l'attitude de l'aéronef est effectué sur un afficheur de type « tête basse » dans la mesure où le pilote doit généralement incliner la tête ou au moins son regard vers le bas pour lire les informations affichées.

Pour les afficheurs de type « tête haute » connus également sous le terme HUD (de l'anglais « Head Up Display »), les méthodes de visualisation de l'attitude de l'aéronef peuvent être plus sophistiquées.

En particulier, dans un tel cas, il est possible d'obtenir un affichage conforme au paysage réelle perçue par le pilote. Ainsi, par exemple, il est possible de faire coïncider une ligne d'horizon affichée sur un afficheur HUD avec la ligne d'horizon réelle vue par le pilote.

Pour mettre en œuvre un tel affichage, on connait notamment une méthode consistant à déterminer un cylindre autour de l'aéronef de sorte que sa hauteur soit parallèle à la ligne d'horizon réelle et que l'axe longitudinal de l'aéronef soit orienté vers la surface latérale de ce cylindre. Ainsi, sur la surface latérale du cylindre, il est possible de déterminer une échelle de tangage qui est ensuite projetée sur l'afficheur HUD correspondant.

On connait également différentes méthodes d'affichage permettant d'afficher différentes assiettes de l'aéronef en utilisant des graduations droites. Cela est par exemple le cas de l'avion F16, comme illustré par l'enregistrement video de l'affichage tête haute intitulé "F-16 Incentive Flight FULL Length HUD Cam" (posté sur Youtube le 22 novembre 2011; XP054978864). Cela est également illustré dans le document Steven P Rogers ET AL : « Development of a Flight Simulator and an Intelligent Symbology Management System for Helmet Mounted Displays in Rotorcraf ».

Toutefois, indépendamment du type de l'afficheur utilisé, il existe un besoin d'une représentation intuitive de l'attitude de l'aéronef pour permettre au pilote d'avoir une meilleure conscience de sa situation spatiale. Ce besoin est notamment identifié pour les rétablissements de situations dites « inusuelles », pour lutter contre les cas de désorientation spatiale du pilote et également offrir une compréhension de l'attitude de l'aéronef demandant la mobilisation de moins de ressources cognitives pour le pilote.

Par situation inusuelle, on comprend un vol à de très fortes assiettes (positives ou négatives) pouvant aller jusqu'au vol sur le dos de l'aéronef. Ces situations apparaissent notamment dans les avions de chasse, par exemple dans le cadre du combat air-air.

En particulier, dans ces situations inusuelles, les méthodes et les dispositifs de visualisation de l'attitude existants se trouvent inappropriés dans la mesure où la ligne d'horizon se trouve souvent hors du champ de vision du pilote et le défilement des échelles de tangage est trop rapide pour être lisible. Ainsi, il est souvent nécessaire que le pilote stabilise son mouvement afin de rendre la symbologie affichée compréhensible.

La présente invention a pour but de remédier à ces inconvénients et de proposer donc une méthode de visualisation de l'attitude permettant d'éviter la désorientation du pilote même dans les situations inusuelles tout en lui demandant une charge cognitive minimale pour comprendre sa situation spatiale.

À cet effet, l'invention a pour objet un procédé de visualisation conforme à la revendication 1.

D'autres aspects avantageux de l'invention sont fournis par les revendications 2 à 15.

L'invention a également pour objet un produit programme d'ordinateur comportant des instructions logicielles qui, lorsque mises en œuvre par un équipement informatique, mettent en œuvre le procédé tel que défini précédemment.

L'invention a également pour objet un système de visualisation de l'attitude d'un aéronef, comportant des moyens techniques mettant en œuvre le procédé tel que décrit précédemment.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'un système de visualisation selon l'invention ;
- la figure 2 est un organigramme d'un procédé de visualisation selon l'invention, le procédé étant mis en œuvre par le système de la figure 1 ; et
- les figures 3 à 11 sont des images expliquant la mise en œuvre du procédé de la figure 2.

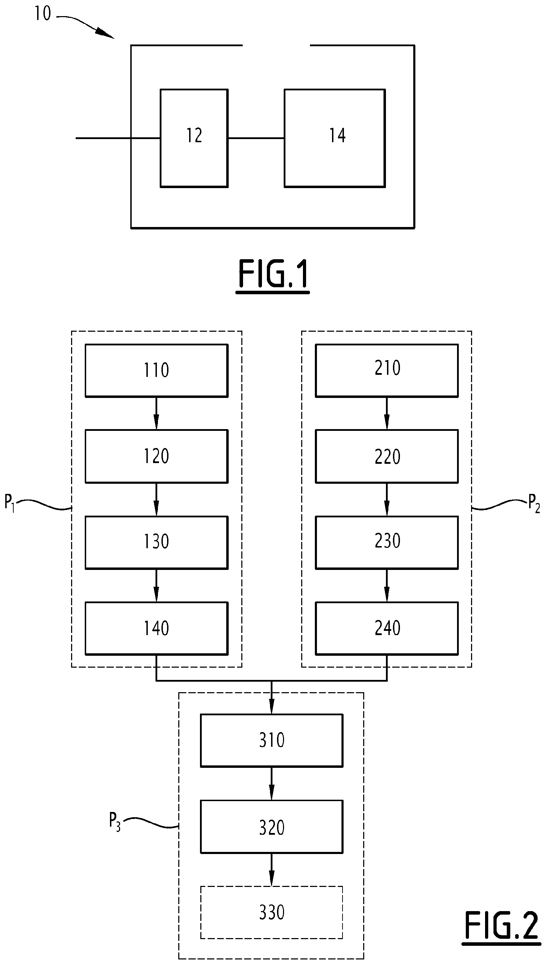

Le système de visualisation 10 de la figure 1 est utilisable dans le cockpit d'un aéronef par l'équipage de celui-ci.

Par aéronef, on comprend tout engin pilotable pour voler notamment dans l'atmosphère terrestre, tel qu'un avion, notamment un avion de chasse, un hélicoptère, un drone, etc.

Par cockpit de cet aéronef, on comprend l'endroit à partir duquel le pilotage de l'aéronef s'effectue. Le cockpit est disposé à l'intérieur de l'aéronef de manière classique ou est déporté de l'aéronef. Dans ce dernier cas, il s'agit notamment d'un centre de pilotage distant effectuant à distance le pilotage de l'aéronef comme c'est notamment le cas d'un drone.

Par équipage de l'aéronef, on comprend un ou plusieurs pilotes effectuant le pilotage de l'aéronef à partir du cockpit. Lorsque l'équipage est composé de plusieurs pilotes, la notion « pilote » utilisée par la suite de la description est relative à l'un de ces pilotes, avantageusement au pilote exploitant directement le système de visualisation selon l'invention.

L'aéronef définit un axe longitudinal et un point d'observation de son attitude.

L'axe longitudinal s'étend le long de l'aéronef et est connu également sous le terme « axe de roulis ». L'assiette de l'aéronef correspond à l'angle formé entre l'axe longitudinal et un plan horizontal d'un repère terrestre.

Le point d'observation de l'attitude de l'aéronef correspond à un point de l'aéronef à partir duquel s'effectuent l'observation et éventuellement, le contrôle de l'attitude de l'aéronef. Ainsi, ce point d'observation correspond avantageusement à l'œil du pilote. Lorsque le pilotage s'effectue à distance, ce point correspond à un point de prise d'images des environs de l'aéronef qui sont transmises au centre de pilotage distant.

L'aéronef définit en outre un axe transversal perpendiculaire à l'axe longitudinal et s'étendant par exemple le long de la voilure de l'aéronef. Cet axe est connu également sous le terme « axe de tangage ». L'inclinaison de l'aéronef correspond à l'angle formé entre l'axe transversal et un plan horizontal d'un repère terrestre.

En référence à la figure 1, le système de visualisation 10 comprend un module de traitement 12 et un écran d'affichage 14.

Le module de traitement 12 est configuré pour acquérir des informations relatives à l'attitude courante de l'aéronef. À cet effet, le module de traitement 12 est raccordé à une centrale inertielle de l'aéronef ou à tout autre dispositif embarqué connu en soi qui est apte à fournir notamment l'assiette courante et l'inclinaison courante de l'aéronef.

Le module de traitement 12 est configuré en outre pour traiter ces informations comme cela sera expliqué par la suite pour visualiser l'attitude courante de l'aéronef sur l'écran d'affichage 14.

Le module de traitement 12 se présente par exemple au moins partiellement sous la forme d'un logiciel qui est exécuté par un processeur adapté et est stocké dans une mémoire adaptée.

En variante ou en complément, le module de traitement 12 se présente au moins partiellement sous la forme d'un dispositif physique, comme par exemple un circuit programmable.

L'écran d'affichage 14 est raccordé au module de traitement 12 et est apte à afficher des informations issues de ce module.

Selon un exemple avantageux de réalisation de l'invention, l'écran d'affichage 14 est un afficheur de type tête-haute connu en soi.

Cet écran d'affichage 14 est disposé devant le pilote ou est intégré dans son casque. Il est au moins partiellement transparent et permet d'afficher des informations relatives au pilotage de l'aéronef de manière conforme avec la réalité observée par le pilote. De manière connue en soi, les informations relatives au pilotage de l'aéronef sont par exemple projetées sur cet écran par des moyens de projection adaptés.

Selon un autre exemple de réalisation, l'écran d'affichage 14 est un afficheur de type tête-basse également connu en soi.

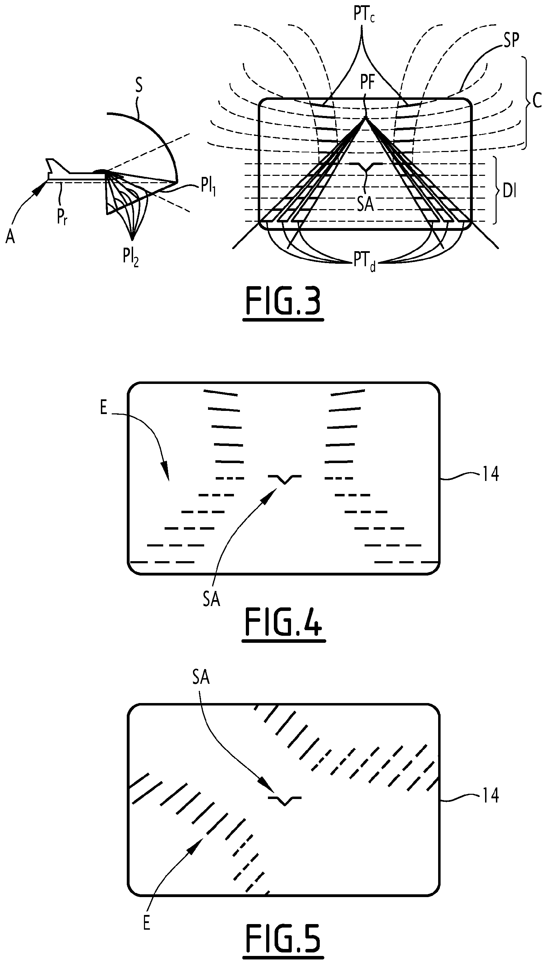

Le procédé de visualisation mis en œuvre par le système de visualisation 10 sera désormais expliqué en référence à la figure 2 présentant un organigramme de ses étapes et en référence aux figures 3, 6, 8 et 10 illustrant schématiquement la mise en œuvre de ces différentes étapes pour différentes assiettes courantes de l'aéronef.

En particulier, la partie gauche de chacune des figures 3, 6, 8 et 10 illustre schématiquement une vue latérale des différentes formes obtenues lors de la mise en œuvre du procédé. La partie droite de chacune de ces figures illustre schématiquement une vue en perspective de ces formes, à partir par exemple du point d'observation.

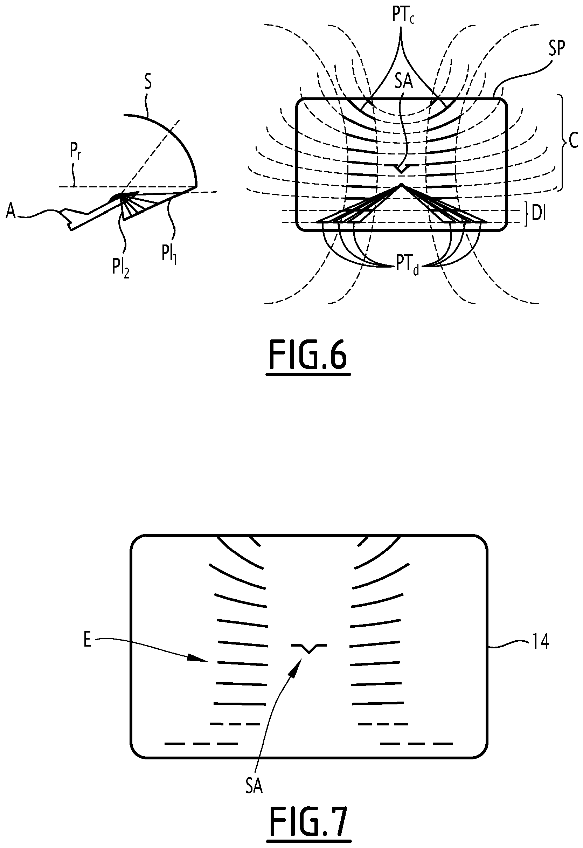

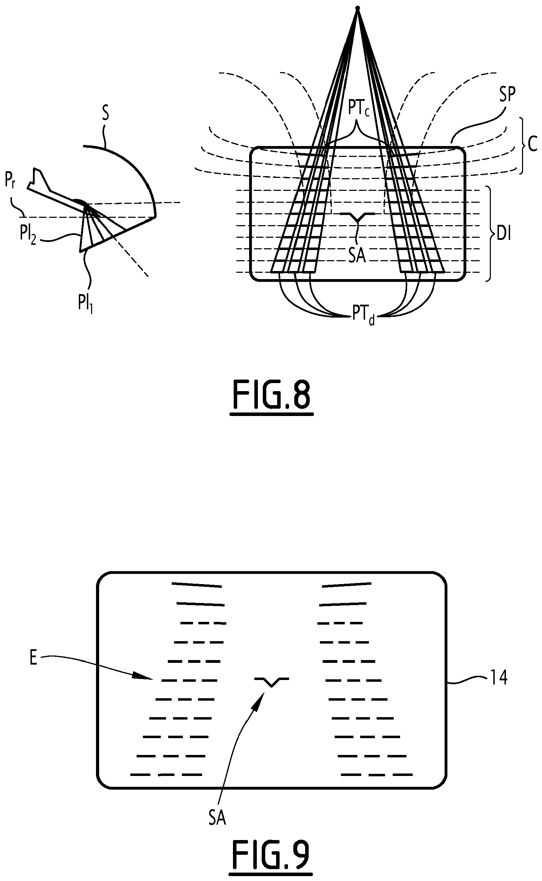

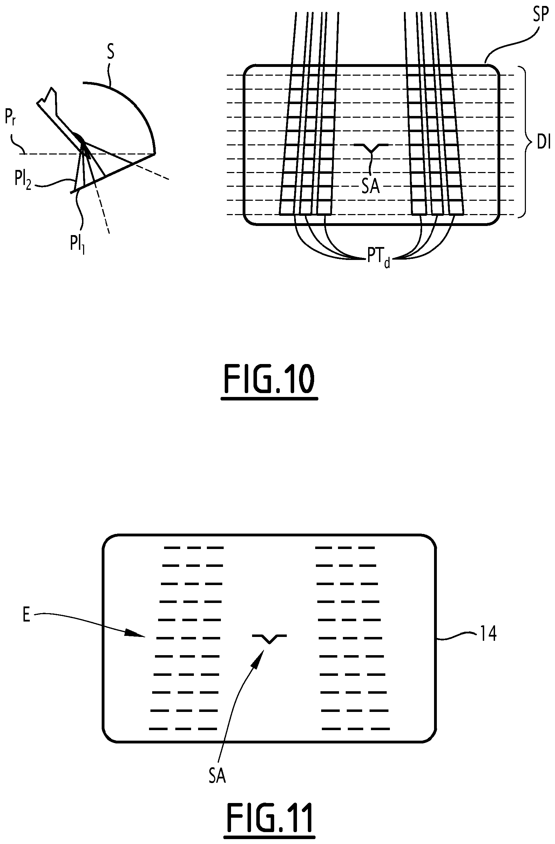

Sur la figure 3, l'aéronef A est en vol horizontal et son assiette est donc égale à 0°. Sur la figure 6, l'aéronef A est en action à cabrer et son assiette est donc positive. Sur les figures 8 et 10, l'aéronef A est en piqué et son assiette est donc négative, l'assiette de l'aéronef A de la figure 10 étant inférieure à celle de la figure 8. Sur l'ensemble des figures 3, 6, 9 et 10, l'inclinaison de l'aéronef A est sensiblement égale à 0°.

Le procédé de visualisation permet notamment d'afficher sur l'écran 14 une échelle de tangage composée d'une graduation zéro pour visualiser l'assiette nulle de l'aéronef, de graduations droites pour visualiser les assiettes négatives de l'aéronef et de graduations courbées pour visualiser les assiettes positives de l'aéronef.

À cet effet, le procédé comporte une première phase P₁ permettant de déterminer les graduations droites de l'échelle, une deuxième phase P₂ permettant de déterminer les graduations courbées de l'échelle et une troisième phase P₃ permettant de former et de visualiser cette échelle de tangage.

La première phase P₁ et la deuxième phase P₂ sont exécutées en parallèle ou de manière consécutive l'une après l'autre. La troisième phase P₃ est exécutée après l'exécution des phases P₁ et P₂.

Initialement, le module de traitement 12 acquiert les informations relatives à l'attitude courante de l'aéronef. Ces informations comprennent notamment l'assiette courante (ou tangage) et l'inclinaison courante (ou roulis) de l'aéronef.

Le module de traitement 12 définit en outre une surface de projection sur laquelle seront projetées différentes formes obtenues lors de la mise en œuvre du procédé, pour être visualisées.

La surface de projection est une surface virtuelle située devant le point d'observation à l'intérieur de l'aéronef ou bien à l'extérieur de celui-ci.

Lorsque l'écran d'affichage 14 est un afficheur de type tête-haute, la surface de projection correspond avantageusement à cet écran d'affichage 14.

Lorsque l'écran d'affichage 14 est un afficheur de type tête-basse, la surface de projection correspond à toute autre surface destinée à être visualisée sur cet écran.

Sur les figures 3, 6, 9 et 10, cette surface de projection est désignée par la référence « SP ».

Finalement, le module de traitement 12 définit dans un repère terrestre un plan horizontal de référence qui correspond par exemple à un plan horizontal traversant l'aéronef lorsque l'assiette de celui-ci est égale à 0° ou à un plan horizontal situé légèrement au-dessous de l'aéronef ayant une telle assiette (par exemple 20° au-dessous du point d'observation).

Lors de l'étape initiale 110 de la première phase P₁, le module de traitement 12 détermine un premier plan représentatif d'une perspective vue par le pilote. Il s'agit d'un plan imaginaire dans l'espace environnant de l'aéronef.

Ce premier plan est situé devant l'aéronef et intersecte l'axe longitudinal de celui-ci. Il est obtenu en inclinant le plan horizontal de référence selon un angle d'inclinaison non-nul. Cette inclinaison s'effectue par exemple par rapport à une droite du plan horizontal de référence perpendiculaire à l'axe longitudinal de l'aéronef. Cette droite sera désignée par la suite par le terme « droite horizontale de référence ».

Le premier plan forme ainsi une pente ascendante par rapport à la direction du déplacement de l'aéronef et donc, par rapport à son axe longitudinal.

En outre, le premier plan est tronqué par le plan horizontal de référence et s'étend au-dessous de ce plan horizontal de référence. Dans ce cas, l'angle d'inclinaison du premier plan est compris entre 0° et 90°, de préférence entre 10° et 30°, avantageusement entre 15° et 25°, et sensiblement égal à 20°.

Sur les figures 3, 6, 8 et 10, le premier plan est désigné par la référence « PI₁ » et le plan horizontal de référence par la référence « Pr ».

Lors de l'étape suivante 120, le module de traitement 12 détermine une pluralité de deuxièmes plans représentatifs de différentes assiettes négatives ou égales à zéro de l'aéronef. Comme dans le cas précédent, il s'agit des plans imaginaires.

En particulier, chaque deuxième plan est associé à une assiette possible de l'aéronef et représente ainsi un plan qui serait formé par l'aéronef ayant cette assiette et l'inclinaison nulle. Autrement dit, chaque deuxième plan correspond au plan formé par l'axe longitudinal et l'axe transversal de l'aéronef lorsque l'attitude de celui-ci est définie par l'assiette correspondant à ce deuxième plan et l'inclinaison nulle. Ainsi, comme cela sera démontré par la suite, chaque deuxième plan correspond à une graduation droite de l'échelle de tangage.

En outre, chaque deuxième plan est construit à partir du point d'observation selon un angle régulier qui est compris par exemple entre 3° et 10°, et est égal sensiblement à 5°.

Chaque deuxième plan traverse le premier plan suivant une droite d'intersection. L'ensemble des droites d'intersection sont parallèles l'une à l'autre.

Sur les figures 3, 6, 8 et 10, les deuxièmes plans sont désignés par la référence « Pl₂ » et les droites d'intersection par la référence « DI ».

Lors de l'étape suivante 130, le module de traitement 12 fait une troncation des droites d'intersection par au moins deux paires de premiers plans de troncation pour obtenir au moins deux parties tronquées de chaque ligne d'intersection.

Chaque partie tronquée des droites d'intersection est comprise entre les premiers plans de troncation d'une même paire de premiers plans de troncation. Les parties tronquées comprises entre une même paire de premiers plans de troncation forment un groupe.

Chaque premier plan de troncation est perpendiculaire au plan horizontal de référence.

En outre, chaque premier plan de troncation intersecte la droite horizontale de référence.

Au niveau de l'aéronef, lesdites deux paires de premiers plans de troncation sont situées de part et d'autre de l'axe longitudinal. Ainsi, par exemple, l'espacement entre les premiers plans en regard des paires différentes est choisi de sorte à ce que la droite passant par le point d'observation et le point d'intersection de la droite horizontale de référence avec l'un des plans en regard, forme avec l'axe longitudinal un angle compris entre 5° et 20°, et de préférence entre 10° et 15°. L'avantage d'une telle disposition des premiers plans de troncation sera expliqué par la suite.

Selon un exemple de réalisation, chaque premier plan de troncation est parallèle à l'axe longitudinal de l'aéronef.

Selon un autre exemple de réalisation, l'angle entre les premiers plans de troncation de chaque paire de premiers plans de troncation est variable en fonction de l'assiette de l'aéronef, comme cela sera expliqué par la suite.

Sur les figures 3, 6, 8 et 10, la référence « PT_{d} » désigne les parties tronquées des droites d'intersection DI par six paires de premiers plans de troncation. Trois de ces paires sont disposées à gauche d'un symbole SA représentatif de l'aéronef A et c'est-à-dire, à gauche de l'axe longitudinal, et les trois autres de ces paires sont disposées à droite du symbole SA et c'est-à-dire, à droite de l'axe longitudinal.

Lors de l'étape suivante 140, le module de traitement 12 projette les droites d'intersection, et en particulier les parties tronquées de ces droites d'intersection, sur la surface de projection pour obtenir une pluralité de projections droites sur cette surface de projection.

Selon un exemple de réalisation, cette projection est faite de sorte à ce que les projections droites parallèles soient espacées l'une de l'autre d'une même distance.

Sur les figures 3, 6, 8 et 10, les projections droites coïncident avec les parties tronquées PT_{d} des droites d'intersection DI.

Lors de l'étape initiale 210 de la deuxième phase P₂, le module de traitement 12 détermine une sphère centrée sur le point d'observation, tronquée par le plan horizontal de référence et s'étendant au-dessus de ce plan horizontal de référence.

La ligne horizontale de référence forme par exemple une tangente à cette sphère au niveau du point d'observation.

Comme dans les cas précédents, il s'agit d'une sphère imaginaire.

Sur les figures 3, 6, 8 et 10, la sphère est désignée par la référence « S ».

Lors de l'étape suivante 220, le module de traitement 12 détermine une pluralité de cercles, chaque cercle appartenant à la sphère et s'étendant dans un plan parallèle au plan horizontal de référence.

Selon un exemple de réalisation, les cercles sont choisis de sorte que dans un plan vertical comportant le point d'observation, les droites raccordant le point d'observation avec les points d'intersection de ce plan avec les cercles soient espacées angulairement d'un même angle.

Sur les figures 3, 6 et 8, les cercles sont désignés par la référence « C ». Sur la figure 10, ces cercles ne sont pas visibles compte tenu d'un fort piqué de l'aéronef A.

Lors de l'étape suivante 230, le module de traitement 12 fait une troncation des cercles par au moins deux paires de deuxièmes plans de troncation pour obtenir au moins deux parties tronquées de chaque cercle.

Chaque partie tronquée des cercles est comprise entre les deuxièmes plans de troncation d'une même paire de deuxièmes plans de troncation.

Chaque deuxième plan de troncation est perpendiculaire au plan horizontal de référence.

En outre, chaque deuxième plan de troncation intersecte la droite horizontale de référence.

Au niveau de l'aéronef, lesdites deux paires de deuxièmes plans de troncation sont situées de part et d'autre de l'axe longitudinal. Ainsi, par exemple, l'espacement entre les deuxièmes plans en regard des paires différentes est choisi de sorte à ce que la droite passant par le point d'observation et le point d'intersection de la droite horizontale de référence avec l'un des plans en regard forme avec l'axe longitudinal un angle compris entre 5° et 20°, et de préférence entre 10° et 15°. L'avantage d'une telle disposition des premiers plans de troncation sera expliqué par la suite.

Chaque deuxième plan de troncation est parallèle à l'axe longitudinal de l'aéronef. Ainsi, lorsque les premiers plans de troncation sont également parallèles à l'axe longitudinal de l'aéronef, au moins certains des deuxièmes plans de troncations coïncident avec les premiers plans de troncation correspondants.

Sur les figures 3, 6 et 8, la référence « PT_{c} » désigne les parties tronquées des cercles C par deux paires de deuxièmes plans de troncation. L'une de ces paires est disposée à gauche du symbole SA et c'est-à-dire, à gauche de l'axe longitudinal, et l'autre est disposée à droite du symbole SA et c'est-à-dire, à droite de l'axe longitudinal.

Lors de l'étape suivante 240, le module de traitement 12 projette les cercles, et plus particulièrement les parties tronquées de ces cercles, sur la surface de projection pour obtenir une pluralité de projections courbées sur cette surface de projection.

Comme dans le cas précédent, selon un exemple de réalisation, cette projection est faite de sorte à ce que les projections courbées correspondant à des cercles différents soient espacées l'une de l'autre d'une même distance dans au moins une direction traversant l'ensemble des projections courbées.

Sur les figures 3, 6 et 8, les projections courbées coïncident avec les parties tronquées PT_{c} des cercles C.

Lors de l'étape initiale 310 de la troisième phase P₃, le module de traitement 12 forme une échelle de tangage à partir des projections droites déterminées lors de l'étape 140 et des projections courbées déterminées lors de l'étape 240.

Les projections droites forment alors des graduations droites de cette échelle pour visualiser des assiettes négatives. Les graduations droites forment plusieurs groupes correspondant aux groupes des parties tronquées obtenus lors de l'étape 130.

Les projections courbées forment des graduations courbées.

Une graduation zéro entre les graduations droites et courbées est par ailleurs ajoutée pour désigner l'assiette nulle de l'aéronef.

Par construction, les différents groupes des graduations droites convergeant l'un vers l'autre avec l'approchement de la gradation zéro à partir d'une frontière basse de l'échelle. En outre, la courbure des graduations courbées augmente avec l'éloignement de la graduation zéro jusqu'à une frontière haute de l'échelle.

Puis, lors de l'étape 320, le module de traitement 12 affiche sur l'écran d'affichage 14, l'échelle de tangage déterminée avec un symbole immobile représentatif de l'aéronef. Ce symbole est par exemple placé au centre de l'écran correspondant.

En fonction de l'assiette courante de l'aéronef, seulement une partie de cette échelle à proximité de l'assiette courante est affichée sur l'écran 14.

Différents exemples d'affichage sur l'écran 14 correspondant aux exemples expliqués en référence aux figures 3, 6, 8 et 10, sont schématiquement illustrés respectivement sur les figures 4, 7, 9 et 11.

Sur ces figures, la référence E désigne l'échelle de tangage formée et le symbole SA désigne le symbole représentatif de l'aéronef A.

Par ailleurs, la figure 5 illustre un exemple d'affichage du cas correspondant à la figure 3 avec une inclinaison non-nulle de l'aéronef A.

Optionnellement, la troisième phase P₃ comprend en outre une étape 330 de visualisation de symboles spécifiques sur l'échelle de tangage à proximité de ses frontières haute et basse.

Ainsi, par exemple, la frontière haute est atteinte pour les assiettes supérieures à 70° et la frontière basse est atteinte pour les assiettes inférieures à -70°.

Avantageusement, les symboles spécifiques sont différents pour la frontière haute et la frontière basse.

On conçoit alors que l'invention comprend un certain nombre d'avantages.

Tout d'abord, comme cela est visible sur les figures 4, 7, 9 et 11, la disposition particulière des projections droites sur l'échelle de tangage E permet de créer un effet de perspective au pilote. Cet effet est obtenu par le premier plan incliné par rapport au plan horizontal et par une troncation particulière des droites d'intersection des deuxièmes plans avec le premier plan.

En effet, cette troncation de part et d'autre de l'axe longitudinal permet de créer une direction de convergence des projections droites dans un point de fuite (visible sur les figures 3, 6 et 8). Ce point de fuite correspond avantageusement à une assiette positive ou nulle de l'aéronef et peut être reconstruit mentalement par le pilote.

Ainsi, pour les assiettes négatives, le pilote se rend rapidement compte que l'aéronef est en train de piquer lorsque l'échelle défile en divergeant et que l'aéronef est en train de cabrer lorsque l'échelle défile en convergeant.

Pour les assiettes positives, c'est la courbure des projections courbées qui indique au pilote la valeur de l'assiette. En particulier, l'augmentation de la courbure de ces projections indique au pilote que l'aéronef est en train de cabrer.

Par ailleurs, la disposition particulière des projections droites et courbées de part et d'autre de l'axe longitudinal permet de dégager une vue centrale pour le pilote. Cela est notamment avantageux lorsque la visualisation s'effectue sur un afficheur tête-haute car le pilote regarde les environs à travers cet afficheur.

On conçoit alors que ceci permet d'éviter les cas de désorientation du pilote même dans les situations inusuelles tout en lui demandant une charge cognitive minimale.

Finalement, il est possible d'atteindre différents agrandissements de l'échelle de tangage affiché juste en modifiant la position du point d'observation et/ou de la surface de projection.

## Revendications

1. Procédé de visualisation de l'attitude d'un aéronef (A), comprenant la formation d'une échelle de tangage (E) définissant une frontière basse et une frontière haute, et comportant :
- pour visualiser l'assiette nulle de l'aéronef (A), une graduation zéro entre la frontière basse et la frontière haute ;
- pour visualiser les assiettes négatives de l'aéronef (A), des graduations droites parallèles formant au moins deux groupes convergeant l'un vers l'autre avec l'approchement de la graduation zéro à partir de la frontière basse ; et
- pour visualiser les assiettes positives de l'aéronef (A), des graduations courbées dont la courbure augmente avec l'éloignement de la graduation zéro jusqu'à la frontière haute.

2. Procédé selon la revendication 1, dans lequel les groupes des graduations droites parallèles convergent l'un vers l'autre jusqu'un point de fuite correspondant à une assiette prédéterminée de l'aéronef (A), l'assiette prédéterminée correspondant de préférence à une assiette nulle de l'aéronef (A).

3. Procédé selon la revendication 1 ou 2, dans lequel l'aéronef définit un axe longitudinal et un point d'observation de son attitude ;
le procédé comprenant une première phase (P₁) de détermination des graduations droites comportant les étapes suivantes :
- détermination (110) d'un premier plan (Pl₁) représentatif d'une perspective, le premier plan (Pl₁) étant situé devant l'aéronef (A), intersectant l'axe longitudinal et étant obtenu en inclinant un plan horizontal de référence (Pr) selon un angle d'inclinaison non nul ;
- détermination (120) d'une pluralité de deuxièmes plans (PI₂) représentatifs de différentes assiettes négatives de l'aéronef (A), chaque deuxième plan incluant le point d'observation et traversant le premier plan (PI₁) suivant une droite d'intersection (DI), les droites d'intersection (DI) étant parallèles l'une à l'autre ;
- projection (140) des droites d'intersection (DI) sur une surface de projection (SP) pour obtenir une pluralité de projections droites sur cette surface de projection (SP).

4. Procédé selon la revendication 3, dans lequel la première phase (P₁) comporte en outre une étape (130) de troncation des droites d'intersection (DI) par au moins deux paires de premiers plans de troncation pour obtenir au moins deux parties tronquées (PT_{d}) de chaque ligne d'intersection (DI), chaque partie tronquée (PT_{d}) étant comprise entre les premiers plans de troncation d'une même paire de premiers plans de troncation, chaque premier plan de troncation étant perpendiculaire au plan horizontal de référence (Pr) ;
les projections droites correspondant alors à des projections des parties tronquées (PT_{d}) des droites d'intersection (DI) sur la surface de projection (SP).

5. Procédé selon la revendication 4, dans lequel lesdites deux paires de premiers plans de troncation sont situées, au niveau de l'aéronef (A), de part et d'autre de l'axe longitudinal.

6. Procédé selon la revendication 4 ou 5, dans lequel l'angle entre les premiers plans de troncation d'une même paire de premiers plans de troncation est variable en fonction de l'assiette de l'aéronef (A).

7. Procédé selon l'une quelconque des revendications 3 à 5 prise en combinaison avec la revendication 2, dans lequel le point de fuite correspond au point de croisement de l'ensemble des droites raccordant des extrémités correspondantes des projections des parties tronquées (PT_{d}) correspondantes des droites d'intersection (PI).

8. Procédé selon l'une quelconque des revendications 3 à 7, dans lequel, sur la surface de projection (SP), les projections droites parallèles sont espacées l'une de l'autre d'une même distance.

9. Procédé selon l'une quelconque des revendications 3 à 8, dans lequel, dans le point d'observation, les deuxièmes plans (PI₂) sont espacés l'un de l'autre d'un même angle.

10. Procédé selon l'une quelconque des revendications 3 à 9, dans lequel :
- le premier plan (PI₁) est tronqué par le plan horizontal de référence (Pr) et s'étend au-dessous de ce plan horizontal de référence (Pr) ; et
- l'angle d'inclinaison du premier plan (PI₁) par rapport au plan horizontal de référence (Pr) est compris entre 0° et 90°, de préférence entre 10° et 30°.

11. Procédé selon l'une quelconque des revendications précédentes, dans lequel l'aéronef définit un axe longitudinal et un point d'observation de son attitude ;
le procédé comprenant en outre une deuxième étape (P₂) de détermination des graduations courbées comportant les étapes suivantes :
- détermination (210) d'une sphère (S) centrée sur le point d'observation, tronquée par un plan horizontal de référence (Pr) et s'étendant au-dessus de ce plan horizontal de référence (Pr) ;
- détermination (220) d'une pluralité de cercles (C), chaque cercle (C) appartenant à la sphère (S) et s'étendant dans des plans parallèles au plan horizontal de référence (Pr) ;
- projection (240) des cercles (C) sur une surface de projection (SP) pour obtenir une pluralité de projections courbées sur cette surface de projection (SP).

12. Procédé selon la revendication 11 prise en combinaison avec la revendication 3, comprenant en outre une troisième phase (P₃) de visualisation comportant les étapes suivantes :
- construction (310) de l'échelle de tangage (E) à partir des projections droites formant les graduations droites et à partir des projections courbées formant les graduations courbées ;
- visualisation (320) de l'échelle de tangage (E) et d'un symbole immobile (SA) représentatif de l'aéronef (A) sur un écran d'affichage (14).

13. Procédé selon la revendication 12, dans lequel la troisième phase (P₃) comportant en outre une étape de visualisation (330) de symboles spécifiques aux frontières basse et haute de l'échelle de tangage (E).

14. Procédé selon l'une quelconque des revendications 11 à 13, dans lequel la troisième phase (P₃) comportant en outre une étape (230) de troncation des cercles (C) par au moins deux paires de deuxièmes plans de troncation pour obtenir au moins deux parties tronquées (PT_{d}) de chaque cercle (C), chaque partie tronquée (PT_{c}) étant comprise entre les deuxièmes plans de troncation d'une même paire de deuxièmes plans de troncation, chaque deuxième plan de troncation étant perpendiculaire au plan horizontal de référence (Pr) ;
les projections courbées correspondant alors à des projections des parties tronquées des cercles (C) sur la surface de projection (SP).

15. Procédé selon la revendication 14, dans lequel lesdites deux paires de deuxièmes plans de troncation sont situées, au niveau de l'aéronef (A), de part et d'autre de l'axe longitudinal ;
chaque deuxième plan de troncation étant de préférence parallèle à l'axe longitudinal.

16. Produit programme d'ordinateur comportant des instructions logicielles qui, lorsque mises en œuvre par un équipement informatique, mettent en œuvre le procédé selon l'une quelconque des revendications précédentes.

17. Système de visualisation de l'attitude d'un aéronef, comportant des moyens techniques mettant en œuvre le procédé selon l'une quelconque des revendications 1 à 15.

## Patentansprüche

1. Verfahren zum Visualisieren der Lage eines Luftfahrzeugs (A), welches das Bilden einer Nicken-Skala (E) aufweist, welche eine untere Grenze und eine obere Grenze definiert und welche aufweist:
- zum Visualisieren des Nullwinkels des Luftfahrzeugs (A), eine Nullteilung zwischen der unteren Grenze und der oberen Grenze,
- zum Visualisieren der Negativwinkel des Luftfahrzeugs (A), parallele gerade Teilungen, welche zumindest zwei Gruppen bilden, welche mit der Annäherung zur Nullteilung ausgehend von der unteren Grenze aufeinander zulaufen, und
- zum Visualisieren der Positivwinkel des Luftfahrzeugs (A), gekrümmte Teilungen, deren Krümmung mit der Entfernung von der Nullteilung bis zur oberen Grenze zunimmt.

2. Verfahren gemäß Anspruch 1, wobei die Gruppen an parallelen geraden Teilungen aufeinander bis zu einem Fluchtpunkt zulaufen, welcher zu einem vorbestimmten Winkel des Luftfahrzeugs (A) korrespondiert, wobei der vorbestimmte Winkel vorzugsweise zu einem Nullwinkel des Luftfahrzeugs (A) korrespondiert.

3. Verfahren gemäß Anspruch 1 oder 2, wobei das Luftfahrzeug eine Längsachse und einen Punkt zur Beobachtung seiner Lage definiert,
wobei das Verfahren eine erste Phase (P₁) zum Ermitteln von geraden Teilungen aufweist, welche die folgenden Schritte aufweist:
- Ermitteln (110) von einer ersten Ebene (Pl₁), welche repräsentativ für eine Perspektive ist, wobei die erste Ebene (Pl₁) vor dem Luftfahrzeug (A) angeordnet ist, die Längsachse schneidet und mittels Neigens einer horizontalen Referenzebene (Pr) entlang eines Neigungswinkels ungleich Null erhalten wird,
- Ermitteln (120) von einer Mehrzahl von zweiten Ebenen (PI₂), welche für unterschiedliche Negativwinkel des Luftfahrzeugs (A) repräsentativ sind, wobei jede zweite Ebene den Beobachtungspunkt aufweist und die erste Ebene (PI₁) entlang einer Schnittgeraden (DI) durchläuft, wobei die Schnittgeraden (DI) parallel zueinander sind,
- Projizieren (140) der Schnittgeraden (DI) auf eine Projektionsfläche (SP), um eine Mehrzahl von geraden Projektionen auf dieser Projektionsfläche (SP) zu erhalten.

4. Verfahren gemäß Anspruch 3, wobei die erste Phase (P₁) ferner einen Schritt (130) des Schneidens der Schnittgeraden (DI) mit zumindest zwei Paaren erster Schnittebenen aufweist, um zumindest zwei geschnittene Abschnitte (PT_{d}) jeder Schnittlinie (DI) zu erhalten, wobei jeder geschnittene Abschnitt (PT_{d}) zwischen den ersten Schnittebenen eines gleichen Paares erster Schnittebenen enthalten ist, wobei jede erste Schnittebene senkrecht zur horizontalen Referenzebene (Pr) ist,
wobei die geraden Projektionen dann zu Projektionen der geschnittenen Abschnitte (PT_{d}) der Schnittgeraden (DI) auf der Projektionsfläche (SP) korrespondieren.

5. Verfahren gemäß Anspruch 4, wobei die besagten zwei Paare erster Schnittebenen auf dem Niveau des Luftfahrzeugs (A) beiderseits der Längsachse angeordnet sind.

6. Verfahren gemäß Anspruch 4 oder 5, wobei der Winkel zwischen den ersten Schnittebenen eines gleichen Paars erster Schnittebenen variabel ist in Abhängigkeit vom Winkel des Luftfahrzeugs (A).

7. Verfahren gemäß irgendeinem der Ansprüche 3 bis 5 genommen in Kombination mit Anspruch 2, wobei der Fluchtpunkt zum Schnittpunkt der Gruppe an Geraden korrespondiert, welche korrespondierende Enden der Projektionen der korrespondierenden geschnittenen Abschnitte (PT_{d}) der Schnittgeraden (PI) verbinden.

8. Verfahren gemäß irgendeinem der Ansprüche 3 bis 7, wobei auf der Projektionsfläche (SP) die parallelen geraden Projektionen zueinander in einem gleichen Abstand angeordnet sind.

9. Verfahren gemäß irgendeinem der Ansprüche 3 bis 8, wobei im Beobachtungspunkt die zweiten Ebenen (Pl₂) zueinander in einem gleichen Winkelabstand angeordnet sind.

10. Verfahren gemäß irgendeinem der Ansprüche 3 bis 9, wobei:
- die erste Ebene (PI₁) mit der horizontalen Referenzebene (Pr) geschnitten ist und sich unterhalb dieser horizontalen Referenzebene (Pr) erstreckt und
- der Neigungswinkel der ersten Ebene (PI₁) bezüglich der horizontalen Referenzebene (Pr) zwischen 0° und 90°, vorzugsweise zwischen 10° und 30°, liegt.

11. Verfahren gemäß irgendeinem der vorherigen Ansprüche, wobei das Luftfahrzeug eine Längsachse und einen Punkt zur Beobachtung seiner Lage definiert,
wobei das Verfahren ferner einen zweiten Schritt (P₂) des Ermittelns von gekrümmten Teilungen aufweist, welcher die folgenden Schritte aufweist:
- Ermitteln (210) von einer Kugel (S), welche im Beobachtungspunkt zentriert ist, welche von einer horizontalen Referenzebene (Pr) geschnitten wird und welche sich oberhalb dieser horizontalen Referenzebene (Pr) erstreckt,
- Ermitteln (220) von einer Mehrzahl von Kreisen (C), wobei jeder Kreis (C) zur Kugel (S) gehört und sich in Ebenen erstreckt, welche parallel zur horizontalen Referenzebene (Pr) sind,
- Projizieren (240) der Kreise (C) auf eine Projektionsfläche (SP), um eine Mehrzahl von gekrümmten Projektionen auf dieser Projektionsfläche (SP) zu erhalten.

12. Verfahren gemäß Anspruch 11 genommen in Kombination mit Anspruch 3, welches ferner eine dritte Phase (P₃) zum Visualisieren aufweist, welche die folgenden Schritte aufweist:
- Konstruieren (310) der Nicken-Skala (E) ausgehend von den geraden Projektionen, welche die geraden Teilungen bilden, und ausgehend von den gekrümmten Projektionen, welche die gekrümmten Teilungen bilden,
- Visualisieren (320) der Nicken-Skala (E) und eines unbeweglichen Symbols (SA), welches repräsentativ für das Luftfahrzeug (A) ist, auf einem Anzeigebildschirm (14).

13. Verfahren gemäß Anspruch 12, wobei die dritte Phase (P₃) ferner aufweist einen Schritt des Visualisierens (330) von Symbolen, welche spezifisch für die untere und die obere Grenze der Nicken-Skala (E) sind.

14. Verfahren gemäß irgendeinem der Ansprüche 11 bis 13, wobei die dritte Phase (P₃) ferner aufweist einen Schritt (230) des Schneidens der Kreise (C) mit zumindest zwei Paaren zweiter Schnittebenen, um zumindest zwei geschnittene Abschnitte (PT_{c}) jedes Kreise (C) zu erhalten, wobei jeder geschnittene Abschnitt (PT_{c}) zwischen den zweiten Schnittebenen eines gleichen Paares zweiter Schnittebenen enthalten ist, wobei jede zweite Schnittebene senkrecht zur horizontalen Referenzebene (Pr) ist,
wobei die gekrümmten Projektionen dann zu den Projektionen der geschnittenen Abschnitte der Kreise (C) auf der Projektionsfläche (SP) korrespondieren.

15. Verfahren gemäß Anspruch 14, wobei die besagten zwei Paare zweiter Schnittebenen auf dem Niveau des Luftfahrzeugs (A) beiderseits der Längsachse angeordnet sind,
wobei jede zweite Schnittebene vorzugsweise parallel zur Längsachse ist.

16. Computerprogrammprodukt, welches Softwareanweisungen aufweist, welche, wenn sie mittels einer Computerausrüstung ausgeführt werden, das Verfahren gemäß irgendeinem der vorherigen Ansprüche ausführen.

17. System zum Visualisieren der Lage eines Luftfahrzeugs, welches technische Mittel aufweist, welche das Verfahren gemäß irgendeinem der Ansprüche 1 bis 15 ausführen.

## Claims

1. A visualization method of the attitude of an aircraft (A), comprising the formation of a pitch scale (E) defining a lower border and an upper border, and including:
- to visualize the nil pitch angle of the aircraft (A), a zero graduation on the lower border and the upper border;
- to visualize the negative pitch angles of the aircraft (A), straight parallel graduations forming at least two groups converging toward one another with the approach of the zero graduation from the lower border; and
- to visualize the positive pitch angles of the aircraft (A), curved graduations, the curvature of which increases moving away from the zero graduation toward the upper border.

2. The method according to claim 1, wherein the groups of straight parallel graduations converge toward one another to a vanishing point corresponding to a predetermined pitch angle of the aircraft (A), the predetermined pitch angle preferably corresponding to a nil pitch angle of the aircraft (A).

3. The method according to claim 1 or 2, wherein the aircraft defines a longitudinal axis and an observation point of its attitude;
the method comprising a first phase (P₁) for determining the straight graduations including the following steps:
- determining (110) a first plane (Pl₁) representative of a perspective, the first plane (Pl₁) being situated in front of the aircraft (A), intersecting the longitudinal axis and being obtained by tilting a horizontal reference plane (Pr) by a non-nil incline angle;
- determining (120) a plurality of second planes (Pl₂) representative of different negative pitch angles of the aircraft (A), each second plane including the observation point and passing through the first plane (Pl₁) along an intersection line (DI), the intersection lines (DI) being parallel to one another;
- projecting (140) the intersection lines (DI) over a projection surface (SP) to obtain a plurality of straight projections over said projection surface (SP).

4. The method according to claim 3, wherein the first phase (P₁) further includes a step (130) for truncating intersection lines (DI) via at least two pairs of first truncating planes to obtain at least two truncated parts (PT_{d}) of each intersection line (DI), each truncated part (PT_{d}) being comprised between the first truncating planes of a same pair of first truncating planes, each first truncating plane being perpendicular to the horizontal reference plane (Pr);
the straight projections then corresponding to projections of the truncated parts (PT_{d}) of the intersection lines (DI) over the projection surface (SP).

5. The method according to claim 4, wherein said two pairs of first truncating planes are situated, at the aircraft (A) level, on either side of the longitudinal axis.

6. The method according to claim 4 or 5, wherein the angle between the first truncating planes of a same pair of first truncating planes is variable as a function of the pitch angle of the aircraft (A).

7. The method according to any one of claims 3 to 5 combined with claim 2, wherein the vanishing point corresponds to the point of intersection of the set of lines connecting corresponding ends of the projections of the corresponding truncated parts (PT_{d}) of the intersection lines (PI).

8. The method according to any one of claims 3 to 7, wherein, on the projection surface (SP), the straight parallel projections are spaced apart from one another by a same distance.

9. The method according to any one of claims 3 to 8, wherein, in the observation point, the second planes (PI₂) are spaced apart from one another by a same angle.

10. The method according to any one of claims 3 to 9, wherein:
- the first plane (PI₁) is truncated by the horizontal reference plane (Pr) and extends below said horizontal reference plane (Pr); and
- the incline angle of the first plane (PI₁) with respect to the horizontal reference plane (Pr) is between 0° and 90°, preferably between 10° and 30°.

11. The method according to any one of the preceding claims, wherein the aircraft defines a longitudinal axis and an observation point of its attitude;
the method further comprising a second step (P₂) for determining curved graduations including the following steps:
- determining (210) a sphere (S) centered on the observation point, truncated by a horizontal reference plane (Pr) and extending above said horizontal reference plane (Pr);
- determining (220) a plurality of circles (C), each circle (C) belonging to the sphere (S) and extending in planes parallel to the horizontal reference plane (Pr);
- projecting (240) circles (C) over a projection surface (SP) to obtain a plurality of curved projections over said projection surface (SP).

12. The method according to claim 11 combined with claim 3, further comprising a third visualization phase (P₃) including the following steps:
- building (310) the pitch scale (E) from straight projections forming the straight graduations and from curved projections forming the curved graduations;
- visualizing (320) the pitch scale (E) and an immobile symbol (SA) representative of the aircraft (A) on a display screen (14).

13. The method according to claim 12, the third phase (P₃) further including a visualization step (330) of symbols specific to the lower and upper borders of the pitch scale (E).

14. The method according to any one of claims 11 to 13, the third phase (P₃) further including a step (230) for truncating circles (C) via at least two pairs of second truncating planes to obtain at least two truncated parts (PT_{c}) of each circle (C), each truncated part (PT_{c}) being comprised between the second truncating planes of a same pair of second truncating planes, each second truncating plane being perpendicular to the horizontal reference plane (Pr);
the curved projections then corresponding to projections of the truncated parts of the circles (C) over the projection surface (SP).

15. The method according to claim 14, wherein said two pairs of second truncating planes are situated, at the aircraft (A), on either side of the longitudinal axis;
each second truncating plane preferably being parallel to the longitudinal axis.

16. A computer program product comprising software instructions which, when implemented by a piece of computer equipment, carry out the method according to any one of the preceding claims.

17. A visualization system of the attitude of an aircraft, including technical means implementing the method according to any one of claims 1 to 15.
